# FASCICULE DE BREVET EUROPEEN

(11) **EP 2 616 656 B1**
(45) Date de publication et mention de la délivrance du brevet: **29.10.2014**
(21) Numéro de dépôt: 11752593.1
(22) Date de dépôt: 20.07.2011
(51) Int. Cl.: F02K 1/72, F02K 1/76, F02K 1/09

(54) **DISPOSITIF DE VERROUILLAGE/DÉVERROUILLAGE POUR INVERSEUR DE POUSSÉE À CAPOT COULISSANT ET À TUYÈRE ADAPTATIVE POUR NACELLE DE MOTEUR D'AÉRONEF**
VERRIEGELUNGS-/ENTRIEGELUNGSVORRICHTUNG FÜR EINEN SCHUBUMKEHRER MIT SCHIEBEABDECKUNG UND ADAPTIVER DÜSE FÜR EINE TRIEBWERKSGONDEL EINES FLUGZEUGES
LOCKING/UNLOCKING DEVICE FOR A THRUST REVERSER WITH SLIDING COVER AND ADAPTIVE NOZZLE FOR AIRCRAFT ENGINE NACELLE

(30) Priorité: 13.09.2010 FR 1057240
(43) Date de publication de la demande: 24.07.2013
(73) Titulaire: Aircelle, 76700 Gonfreville L'Orcher (FR)
(72) Inventeur: GONIDEC, Patrick, F-31530 Bretx (FR); AVENEL, Philippe, F-76310 Sainte Adresse (FR); MORADELL-CASELLAS, Pierre, F-61100 Saint Georges Des Groseillers (FR)
(74) Mandataire: Gaillarde, Frédéric F. Ch.
(86) Numéro de dépôt international: PCT/FR2011/051748
(87) Numéro de publication internationale: WO 2012/035223

(56) Documents cités:
- FR-A1- 2 622 929
- FR-A1- 2 902 839
- GB-A- 2 446 441

## Description

La présente invention se rapporte à un dispositif de verrouillage/déverrouillage pour inverseur de poussée à capot coulissant et à tuyère adaptative, pour nacelle de moteur d'aéronef.

Un avion est mu par plusieurs turboréacteurs logés chacun dans une nacelle servant à canaliser les flux d'air engendrés par le turboréacteur qui abrite également un ensemble de dispositifs d'actionnement annexes liés à son fonctionnement et assurant diverses fonctions lorsque le turboréacteur est en fonctionnement ou à l'arrêt.

Ces dispositifs d'actionnement annexes comprennent, notamment, un système mécanique d'inversion de poussée et un système de tuyère adaptative.

Une nacelle présente généralement une structure tubulaire comprenant une entrée d'air en amont du turboréacteur, une section médiane destinée à entourer une soufflante du turboréacteur, une section aval abritant des moyens d'inversion de poussée et destinée à entourer la chambre de combustion du turboréacteur, et est généralement terminée par une tuyère d'éjection dont la sortie est située en aval du turboréacteur.

Les nacelles modernes sont destinées à abriter un turboréacteur double flux apte à engendrer par l'intermédiaire des pales de la soufflante en rotation un flux d'air chaud (également appelé flux primaire) issu de la chambre de combustion du turboréacteur, et un flux d'air froid (flux secondaire) qui circule à l'extérieur du turboréacteur à travers un passage annulaire, également appelé veine, formé entre un carénage du turboréacteur et une paroi interne de la nacelle. Les deux flux d'air sont éjectés du turboréacteur par l'arrière de la nacelle.

Le rôle d'un inverseur de poussée est, lors de l'atterrissage d'un avion, d'améliorer la capacité de freinage de celui-ci en redirigeant vers l'avant au moins une partie de la poussée générée par le turboréacteur. Dans cette phase, l'inverseur obstrue la veine du flux froid et dirige ce dernier vers l'avant de la nacelle, engendrant de ce fait une contre-poussée qui vient s'ajouter au freinage des roues de l'avion.

Les moyens mis en oeuvre pour réaliser cette réorientation du flux froid varient suivant le type d'inverseur. Cependant, dans tous les cas, la structure d'un inverseur comprend des capots mobiles déplaçables entre, d'une part, une position ouverte ou « jet inverse » dans laquelle ils ouvrent dans la nacelle un passage destiné au flux dévié, et d'autre part, une position fermée ou « jet direct » dans laquelle ils ferment ce passage. Ces capots peuvent remplir une fonction de déviation ou simplement d'activation d'autres moyens de déviation.

Dans le cas d'un inverseur de poussée à grilles, également connu sous le nom d'inverseur à cascade, la réorientation du flux d'air est effectuée par des grilles de déviation, le capot n'ayant qu'une simple fonction de coulissage visant à découvrir ou recouvrir ces grilles, la translation du capot mobile s'effectuant selon un axe longitudinal sensiblement parallèle à l'axe de la nacelle. Des panneaux de blocage complémentaires, actionnés par le coulissement du capot, permettent généralement une fermeture de la veine en aval des grilles de manière à optimiser la réorientation du flux froid vers l'extérieur de la nacelle.

Outre sa fonction d'inversion de poussée, le capot coulissant appartient à la section aval de la nacelle et présente une partie aval formant une tuyère d'éjection visant à canaliser l'éjection des flux d'air vers l'extérieur. Cette tuyère peut venir en complément d'une tuyère primaire canalisant le flux chaud et est alors appelée tuyère secondaire.

Les performances de l'inversion de poussée sont obtenues de manière satisfaisante avec les dispositifs connus. Toutefois, pour des raisons d'optimisation aérodynamique, et par là-même d'optimisation de la consommation de carburant, il est tout à fait avantageux de pouvoir régler la section de la sortie du flux d'air froid en aval de la nacelle : il est en effet utile de pouvoir augmenter cette section lors des phases de décollage et d'atterrissage, et de la réduire pendant les phases de croisière : on parle souvent de tuyère adaptative, ou bien encore de « VFN » (Variable Fan Nozzle).

Un tel système est décrit dans le document FR 2 622 929 ou encore FR 2 902 839 par exemple.

Ces documents décrivent la mise en oeuvre d'inverseurs de poussée à grilles équipés d'une tuyère adaptative et prévoient pour ce faire un carénage mobile comprenant une partie amont remplissant la fonction de capot coulissant d'inverseur et une partie aval remplissant la fonction de tuyère adaptative, ces deux parties étant aptes à être reliées entre elles par des moyens de verrou.

Il importe de pouvoir actionner ces deux parties de la nacelle de manière indépendante : on veut en particulier pouvoir augmenter la section de la tuyère adaptative sans actionner les moyens d'inversion de poussée, en particulier lors du décollage.

Pour réaliser cet actionnement indépendant, chaque partie mobile (capot / tuyère) peut être équipée de son propre actionneur (deux actionneurs simple tige ou un vérin double tige, par exemple) et être entraînée de manière indépendante.

Afin d'alléger les moyens d'actionnement, il est possible d'utiliser un unique actionneur simple tige, en prévoyant des moyens de verrouillage / déverrouillage appropriés de la tuyère adaptative au capot coulissant.

Une telle solution et quelques principes de mise en oeuvre sont présentés dans le document FR 2 902 839, notamment aux figures 13 à 15.

La présente invention vise à fournir un autre système de verrouillage / déverrouillage, simple, fiable, compact et passif (c'est-à-dire ne nécessitant aucun apport d'énergie extérieure) de la tuyère adaptative au capot coulissant, particulièrement approprié au cas où l'on utilise un moyen d'actionnement commun (en général un vérin à simple tige) pour ces deux parties de la section aval de la nacelle.

On atteint ce but de l'invention avec un dispositif de verrouillage/déverrouillage pour inverseur de poussée à capot coulissant et à tuyère adaptative, remarquable en ce qu'il comprend :
- un doigt fixe, solidaire de la structure fixe dudit inverseur,
- un premier manchon, solidaire dudit capot coulissant et apte à recevoir ledit doigt,
- un deuxième manchon, monté coulissant sur ledit premier manchon,
- un troisième manchon, solidaire de ladite tuyère adaptative et monté coulissant sur ledit deuxième manchon,
- des premiers moyens de verrouillage, aptes à verrouiller ledit premier manchon par rapport audit doigt,
- des deuxièmes moyens de verrouillage, aptes à verrouiller ledit deuxième manchon par rapport audit premier manchon,
- des troisièmes moyens de verrouillage, aptes à verrouiller ledit troisième manchon par rapport audit deuxième manchon,
   l'ensemble desdits moyens de verrouillage étant agencés de sorte que ledit dispositif puisse se trouver notamment dans l'une des configurations suivantes :
- configuration 1, dans laquelle ledit capot coulissant est verrouillé à ladite structure fixe et ladite tuyère adaptative est réglable : verrouillage dudit premier manchon sur ledit doigt, verrouillage dudit deuxième manchon sur ledit premier manchon, et liberté de coulissement dudit troisième manchon par rapport audit deuxième manchon ;
- configuration 2, dans laquelle ledit capot coulissant est ouvert et solidaire de ladite tuyère adaptative, et réglable de concert avec cette tuyère : déverrouillage dudit premier manchon par rapport audit doigt, verrouillage dudit deuxième manchon par rapport audit premier manchon, et verrouillage dudit troisième manchon par rapport audit deuxième manchon.

Ce système à manchons coulissants et à clavettes de blocage est d'une conception particulièrement simple, de sorte qu'il est peu coûteux à réaliser et à entretenir, et très fiable.

De plus, l'agencement concentrique des différents manchons confère à l'ensemble un très faible encombrement.

Suivant d'autres caractéristiques et avantages du dispositif selon l'invention :
- lesdits premiers moyens de verrouillage comprennent une zone de moindre diamètre formée dans ledit doigt, des premières clavettes traversant ledit premier manchon, un premier profil formé dans le deuxième manchon et apte à pousser lesdites première clavettes au fond de ladite zone lorsque ledit deuxième manchon se déplace vers l'amont dudit premier manchon, et un premier ressort rappelant ce deuxième manchon vers sa position amont ;
- lesdits deuxièmes moyens de verrouillage comprennent des cavités formées dans ledit deuxième manchon, des deuxièmes clavettes traversant ledit premier manchon, un coulisseau monté coulissant à l'intérieur dudit premier manchon et comportant un deuxième profil apte à pousser lesdites deuxièmes clavettes au fond desdites cavités lorsque ledit coulisseau se déplace vers l'amont dudit deuxième manchon, et un deuxième ressort rappelant ce coulisseau vers sa position amont, au contact dudit doigt ;

- lesdits troisièmes moyens de verrouillage comprennent un épaulement formé en aval dudit deuxième manchon, des troisièmes clavettes traversant ledit deuxième manchon, et un troisième profil formé dans ledit premier manchon et apte à pousser lesdites troisièmes clavettes en butée contre le bord amont dudit troisième manchon lorsque ledit deuxième manchon se déplace en aval dudit premier manchon, de manière à bloquer le troisième manchon entre ces troisièmes clavettes et ledit épaulement ;
- ledit dispositif comprend des moyens pour amortir la butée avale dudit deuxième manchon sur ledit premier manchon.

La présente invention se rapporte également à un inverseur de poussée à capot coulissant et à tuyère adaptative, remarquable en ce qu'il comprend au moins un dispositif conforme à ce qui précède.

La présente invention se rapporte également à une nacelle pour moteur d'aéronef, remarquable en ce qu'elle comprend un inverseur de poussée conforme à ce qui précède.

D'autres caractéristiques et avantages de la présente invention apparaîtront à la lumière de la description qui va suivre, et à l'examen des figures ci-annexées, dans lesquelles :
- la figure 1 représente, de manière partielle et en perspective, un inverseur de poussée à grilles comportant un capot coulissant et une tuyère adaptative, incorporant un dispositif de verrouillage/déverrouillage selon l'invention, cet inverseur étant représenté avec le capot d'inversion de poussée en position fermée ou « jet direct » et la tuyère adaptative étant représentée en positon (section la plus faible) ;
- la figure 2 représente de manière schématique le dispositif de verrouillage/déverrouillage dans la configuration correspondant à la position de l'inverseur de poussée de la figure 1 ;
- la figure 3 est une vue analogue à la figure 1, la tuyère adaptative se trouvant en position aval (grande section) et le capot coulissant d'inversion de poussée se trouvant en position fermée (« jet direct ») ;
- les figures 4 et 5, analogues à la figure 2, représentent le dispositif selon l'invention dans deux configurations successives correspondant à la position de l'inverseur de poussée représenté à la figure 3 ;
- la figure 6, analogue aux figures 1 et 3, représentent l'inverseur de poussée avec le capot coulissant en position ouverte (« jet inverse »), et la tuyère adaptative dans la même position par rapport à ce capot coulissant qu'à la figure 3 ;
- la figure 7 représente le dispositif de verrouillage/déverrouillage selon l'invention correspondant à la configuration de la figure 6, et
- les figures 8 à 10 représentent les différentes configurations du dispositif de verrouillage/déverrouillage selon l'invention correspondant au retour de l'inverseur de poussée de la position représentée à la figure 6 à la position représentée à la figure 3, puis enfin, à celle représentée à la figure 1.

Sur l'ensemble de ces figures, des références identiques ou analogues désignent des organes ou ensembles d'organes identiques ou analogues.

On utilisera dans ce qui suit les termes « amont et « aval » : ces termes doivent s'entendre par rapport au sens de circulation de l'air à l'intérieur de l'inverseur de poussée, c'est-à-dire en l'occurrence de la gauche vers la droite de l'ensemble des figures représentées.

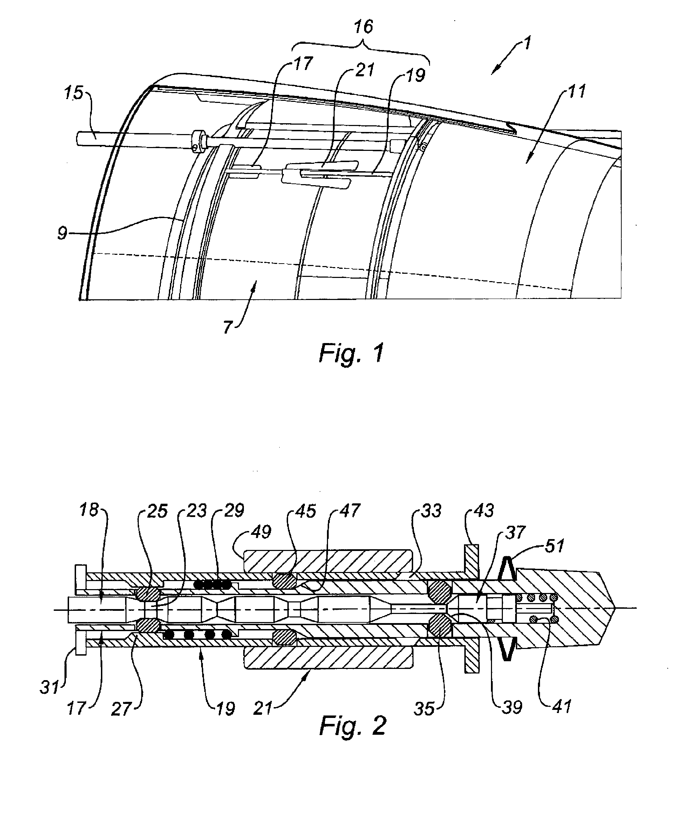

On se reporte à présent à la figure 1, sur laquelle on peut voir un inverseur de poussée à grilles 1, formant la partie aval d'une nacelle de turboréacteur d'aéronef.

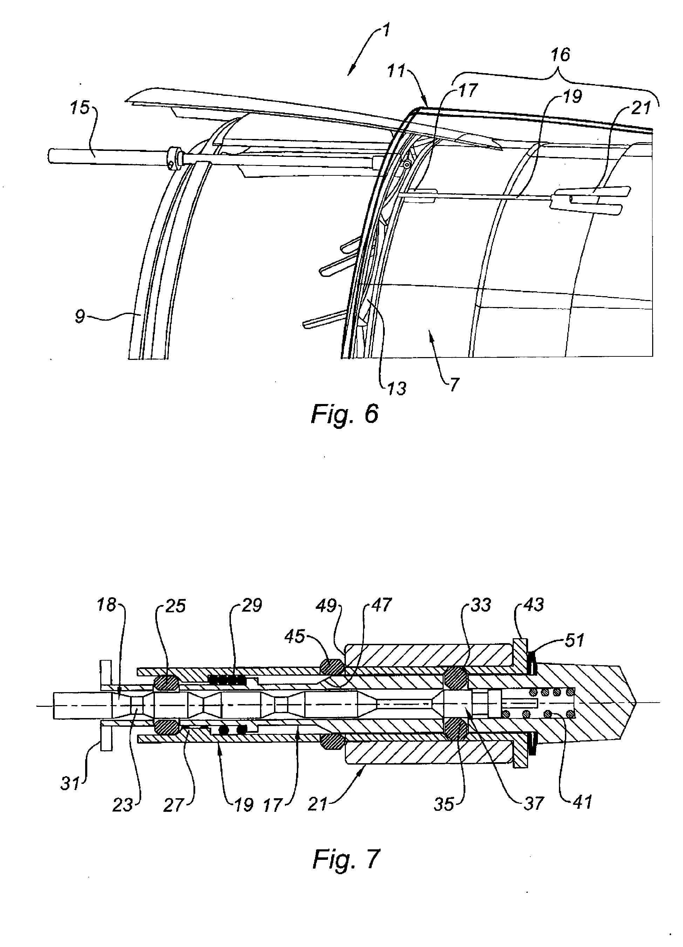

Cet inverseur de poussée comprend un capot 7, monté coulissant par rapport à un cadre avant fixe 9, entre une position fermée (« jet direct ») visible à la figure 1, et une position ouverte (« jet inverse ») visible à la figure 6.

Dans la position fermée représentée à la figure 1, ce capot coulissant 7 couvre des grilles d'inversion de poussée (non représentées), de sorte que le flux d'air secondaire sort en aval de la tuyère 11.

En position ouverte (« jet inverse »), le capot 7 recouvre les grilles d'inversion de poussée, ce qui permet à des volets d'inversion de poussée 13 visibles à la figure 6 de défléchir l'air circulant dans la veine de flux froid de l'inverseur de poussée vers l'extérieur de la nacelle, et ainsi de réaliser la fonction d'inversion de poussée.

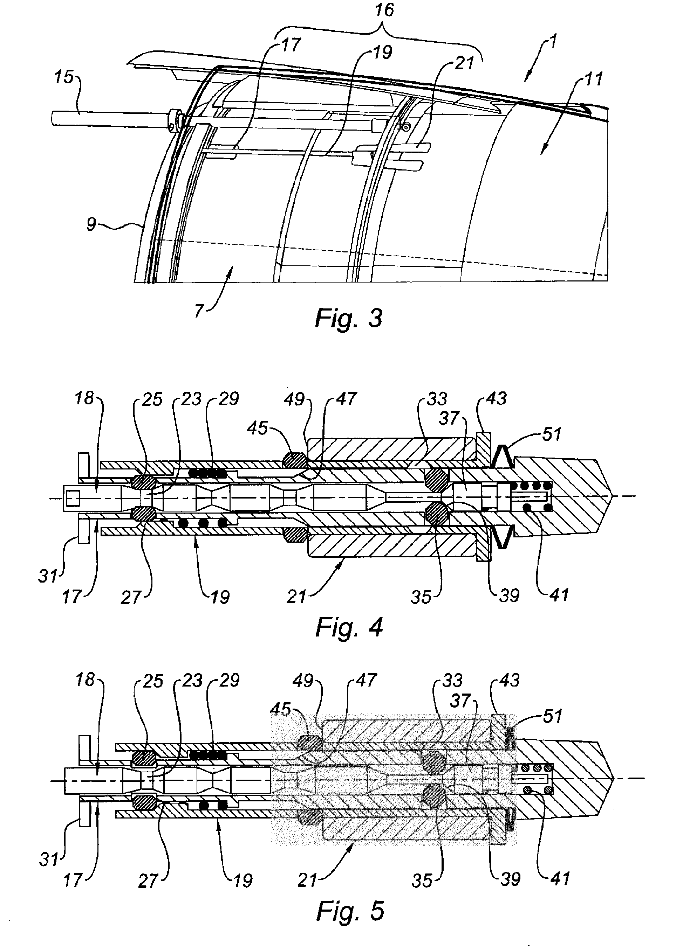

La tuyère adaptative 11, située en aval du capot coulissant 7, est elle-même apte à coulisser par rapport à ce capot entre une position amont, visible à la figure 1, et une position aval, visible aux figures 3 et 6.

L'actionnement du capot coulissant 7 d'une part, et de la tuyère adaptative 11 d'autre part, s'effectue au moyen de vérins à tige unique 15 répartis à la périphérie de l'inverseur de poussée, et agissant uniquement sur la tuyère adaptative 11, grâce à des moyens de verrouillage/déverrouillage 16 qui vont être décrits par la suite de manière plus détaillée.

A noter que ces moyens de verrouillage/déverrouillage peuvent être répartis à la périphérie de l'inverseur de poussée, de la même manière que les vérins d'actionnement 15.

En se reportant à présent à la figure 2, on peut voir que le dispositif de verrouillage/déverrouillage selon l'invention comprend un premier manchon 17, solidaire de la partie intérieure 5 du capot coulissant 7, un deuxième manchon 19 monté coulissant sur le premier manchon 17, et un troisième manchon 21 solidaire de la tuyère adaptative 11, monté coulissant sur le deuxième manchon 19.

Ce dispositif comprend en outre un doigt fixe 18 solidaire du cadre avant 9.

Ce dispositif comprend des premiers moyens de verrouillage, formés par une zone de moindre diamètre 23 du doigt 18, par des premières clavettes 25 traversant le premier manchon 17, par un premier profil 27 formé dans le deuxième manchon 17 et apte à pousser les premières clavettes 25 au fond de la zone 23 lorsque le deuxième manchon 17 se déplace vers l'amont (c'est-à-dire vers la gauche de la figure) du premier manchon 17, et par un premier ressort 29 rappelant le deuxième manchon 19 vers sa position amont, en butée contre un rebord 31 formé dans le premier manchon 17.

Le dispositif selon l'invention comprend en outre les deuxièmes moyens de verrouillage formés par des cavités 33 réalisées dans le deuxième manchon 19, par des deuxièmes clavettes 35 traversant le premier manchon 17, par un coulisseau 37 monté coulissant à l'intérieur du premier manchon 17 et comportant un deuxième profil 39 apte à pousser les deuxièmes clavettes 35 au fond des cavités 33 lorsque le coulisseau 37 se déplace vers l'amont du deuxième manchon 17, et par un deuxième ressort 41 rappelant le coulisseau 37 vers sa position amont, au contact du doigt 18.

Le dispositif selon l'invention comprend également des troisièmes moyens de verrouillage formés par un épaulement 43 réalisé en aval du deuxième manchon 19, par des troisièmes clavettes 45 traversant le deuxième manchon 19, et par un troisième profil 47 apte à pousser les troisièmes clavettes 45 en butée contre le bord amont 49 du troisième manchon 21, lorsque le deuxième manchon 19 se déplace en aval du premier manchon 17, de manière à bloquer le troisième manchon 21 entre les troisièmes clavettes 45 et l'épaulement 43.

La structure du dispositif de verrouillage/déverrouillage étant été décrite, nous allons maintenant analyser son fonctionnement.

Dans la position représentée à la figure 2, le deuxième manchon 19 et rappelé dans sa position amont en butée contre le bord 31 du premier manchon 17, sous l'action du premier ressort 29, ce qui a pour effet de maintenir les premières clavettes 25 à l'intérieur de la zone de moindre diamètre 23 du doigt 18, de par l'action du premier profil 27 du deuxième manchon 19.

Ceci a pour effet de verrouiller le premier manchon 17 sur le doigt 18, et donc d'empêcher l'ouverture du capot coulissant 7.

A noter que le coulissement du deuxième manchon 19 par rapport au premier manchon 17 est lui-même verrouillé par les troisièmes clavettes 45, qui viennent en butée contre le troisième profil 47 du premier manchon 17.

Dans cette configuration, le troisième manchon 21 est en revanche libre de coulisser par rapport au deuxième manchon 19, sous l'action du vérin 15 : on peut de la sorte réguler la position de la tuyère adaptative 11, afin d'obtenir la section souhaitée pour l'éjection du flux d'air froid en aval de la nacelle.

On peut en particulier amener la tuyère adaptative 11 dans la position aval maximale de la figure 3, permettant d'obtenir une section maximale de sortie d'air froid, correspondant notamment aux phases d'atterrissage.

Lors de cette course maximale de la tuyère adaptative 11, le dispositif de verrouillage/déverrouillage selon l'invention prend successivement les configurations des figures 4 et 5.

Sur la figure 4, on peut voir que le troisième manchon 21 arrive en butée contre l'épaulement 43 du deuxième manchon 19, ce qui a pour effet de libérer les troisièmes clavettes 45 vers l'extérieur du deuxième manchon 19, et ainsi de permettre le coulissement de ce deuxième manchon 19 vers l'aval du premier manchon 17.

Ceci a tout d'abord pour effet de libérer les premières clavettes 25 vers l'extérieur du premier manchon 17, comme représenté à la figure 5 : on déverrouille de la sorte le premier manchon 17 par rapport au doigt 18.

Ceci a pour deuxième effet de placer les cavités 33 du deuxième manchon 19 en regard des deuxièmes clavettes 35, comme cela est visible la figure 5.

Une fois que l'on a atteint la configuration de la figure 5, on comprend que le deuxième manchon 21 est bloqué d'une part par l'épaulement 43 du deuxième manchon 19, et d'autre part, par les troisièmes clavettes 45, de sorte que le deuxième manchon 19 et le troisième manchon 21 se déplacent de concert sous l'action du vérin 15.

En particulier, lorsqu'à partir de la configuration de la figure 5, on souhaite procéder à l'inversion de poussée, c'est-à-dire lorsque l'on souhaite faire coulisser le capot 7 vers sa position aval, on continue d'étendre la longueur du vérin 15 jusqu'à ce que le deuxième ressort 41 pousse le coulisseau 37 vers sa position représentée à la figure 7, dans laquelle le deuxième profil 39 de ce coulisseau a tendance à écarter les deuxièmes clavettes 35 vers l'intérieur des cavités 33 du deuxième manchon 19, solidarisant ainsi le deuxième manchon 19 avec le premier manchon 17.

On comprend qu'à ce stade, les trois manchons 17, 19 et 21 forment un seul bloc, actionnable de concert par le vérin 15 : on agit de la sorte sur le capot coulissant 7 par l'intermédiaire de la tuyère adaptative 11, ces deux éléments se déplaçant d'un seul bloc sous l'action du vérin 15.

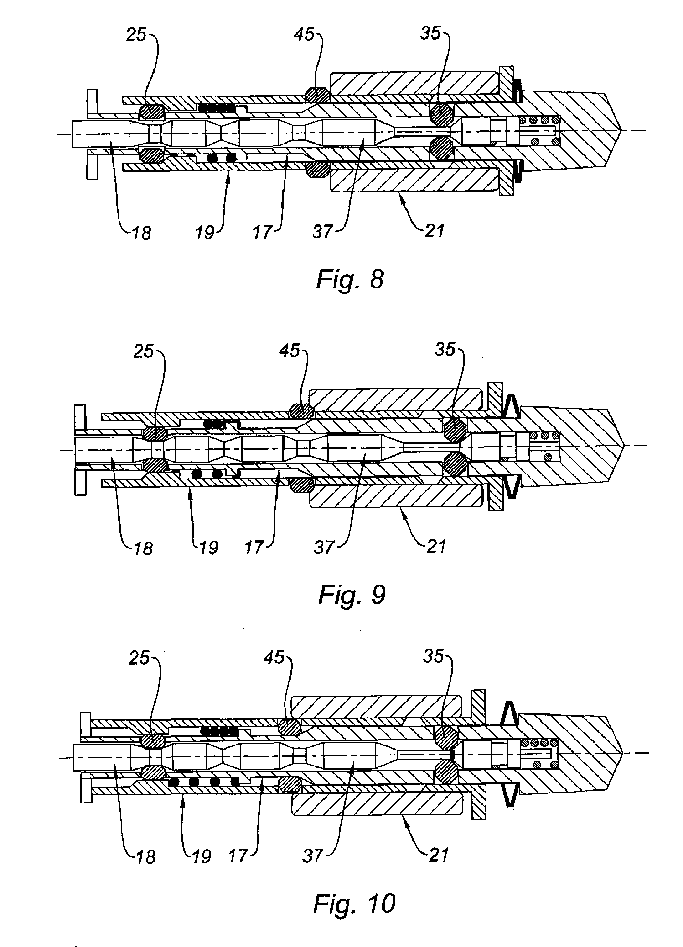

Partant de cette configuration, correspondant à une situation d'atterrissage d'aéronef, lorsqu'on souhaite revenir vers la position initiale (capot coulissant 7 fermé et tuyère 11 replacée dans sa position amont), on rétracte la longueur du vérin 15, ce qui a pour effet de placer le dispositif de verrouillage/déverrouillage selon l'invention dans les positions successives représentées aux figures 8 à 10.

Sur la figure 10, on peut voir que le retour de l'ensemble formé par les trois manchons sous l'action du vérin 15 a pour effet d'appliquer l'extrémité du doigt 18 contre le coulisseau 37, et ainsi de repousser celui-ci vers le fond du premier manchon 17, à l'encontre de l'effort exercé par le deuxième ressort 41.

Ce faisant, le deuxième profil particulier 39 du coulisseau 37 a pour effet de permettre le retour des deuxièmes clavettes 35 vers l'intérieur du premier manchon 17, et ainsi de déverrouiller le deuxième manchon 19 par rapport au premier manchon 17.

Ceci permet, une fois que le capot coulissant 7 est revenu vers sa position fermée, dans laquelle il se trouve bord à bord avec le cadre avant 19 auquel est fixé le doigt 18, de ramener la tuyère adaptative 11 vers sa position amont, en continuant de rétracter la longueur du vérin 15.

Ce faisant, on arrive tout d'abord dans la position de la figure 9, dans laquelle le premier profil du deuxième manchon 19 fait rentrer les premières clavettes 25 au fond de la zone de moindre diamètre 23 du doigt 18, verrouillant ainsi le premier manchon 17, c'est-à-dire le capot coulissant 7 sur le doigt 18.

On arrive enfin à la position de la figure 10, dans laquelle les troisièmes clavettes 45 rentrent à l'intérieur du deuxième manchon 19, grâce à la forme particulière du troisième profil 47 du premier manchon 17, autorisant ainsi le retour en amont du troisième manchon 21, c'est-à-dire le retour de la tuyère adaptative 11 vers sa position de section minimale.

A noter la présence de moyens d'amortissement 51 disposés entre l'épaulement 43 du deuxième manchon 19 et le premier manchon 17, de manière à absorber le choc de butée de ce deuxième manchon 19 contre ce premier manchon 17 en particulier à l'étape représentée à la figure 5.

Comme on aura pu le comprendre à la lumière de ce qui précède, le dispositif de verrouillage/déverrouillage selon l'invention est une conception mécanique extrêmement simple, ce qui le rend peu couteux à réaliser et à entretenir.

De plus, de par l'agencement concentrique des trois manchons 17, 19, 21, ce dispositif de verrouillage/déverrouillage est très peu encombrant, ce qui est très avantageux dans l'environnement d'une nacelle où de nombreux autres organes doivent être agencés.

Bien entendu, la présente invention n'est nullement limitée aux modes de réalisation décrits et représentés, fournis à titre de simples exemples.

## Revendications

1. Dispositif de verrouillage/déverrouillage pour inverseur (1) de poussée à capot coulissant (7) et à tuyère adaptative (11), **caractérisé en ce qu'**il comprend :
- un doigt fixe (18), solidaire de la structure fixe (9) dudit inverseur,
- un premier manchon (17), solidaire dudit capot coulissant et apte à recevoir ledit doigt (18),
- un deuxième manchon (19), monté coulissant sur ledit premier manchon (17),
- un troisième manchon (21), solidaire de ladite tuyère adaptative (11) et monté coulissant sur ledit deuxième manchon (19),
- des premiers moyens de verrouillage, aptes à verrouiller ledit premier manchon (17) par rapport audit doigt (18),
- des deuxièmes moyens de verrouillage, aptes à verrouiller ledit deuxième manchon (19) par rapport audit premier manchon (17),
- des troisièmes moyens de verrouillage, aptes à verrouiller ledit troisième manchon (21) par rapport audit deuxième manchon (19),
l'ensemble desdits moyens de verrouillage étant agencés de sorte que ledit dispositif puisse se trouver notamment dans l'une des configurations suivantes :
- configuration 1, dans laquelle ledit capot coulissant (7) est verrouillé à ladite structure fixe (9) et ladite tuyère adaptative (11) est réglable : verrouillage dudit premier manchon (17) sur ledit doigt (18), verrouillage dudit deuxième manchon (19) sur ledit premier manchon (17), et liberté de coulissement dudit troisième manchon (21) par rapport audit deuxième manchon (19) ;
- configuration 2, dans laquelle ledit capot coulissant (7) est ouvert et solidaire de ladite tuyère adaptative (11), et réglable de concert avec cette tuyère (11) : déverrouillage dudit premier manchon (17) par rapport audit doigt (18), verrouillage dudit deuxième manchon (19) par rapport audit premier manchon (17), et verrouillage dudit troisième manchon (21) par rapport audit deuxième manchon (19).

2. Dispositif selon la revendication 1, **caractérisé en ce que** lesdits premiers moyens de verrouillage comprennent une zone de moindre diamètre (23) formée dans ledit doigt (18), des premières clavettes (25) traversant ledit premier manchon (17), un premier profil (27) formé dans le deuxième manchon (19) et apte à pousser lesdites première clavettes (25) au fond de ladite zone (23) lorsque ledit deuxième manchon (19) se déplace vers l'amont dudit premier manchon (17), et un premier ressort (29) rappelant ce deuxième manchon (19) vers sa position amont.

3. Dispositif selon l'une des revendications 1 ou 2, **caractérisé en ce que** lesdits deuxièmes moyens de verrouillage comprennent des cavités (33) formées dans ledit deuxième manchon (19), des deuxièmes clavettes (35) traversant ledit premier manchon (17), un coulisseau (37) monté coulissant à l'intérieur dudit premier manchon (17) et comportant un deuxième profil (39) apte à pousser lesdites deuxièmes clavettes (35) au fond desdites cavités (33) lorsque ledit coulisseau (37) se déplace vers l'amont dudit deuxième manchon (19), et un deuxième ressort (41) rappelant ce coulisseau (37) vers sa position amont, au contact dudit doigt (18).

4. Dispositif selon l'une quelconque des revendications précédentes, **caractérisé en ce que** lesdits troisièmes moyens de verrouillage comprennent un épaulement (43) formé en aval dudit deuxième manchon (19), des troisièmes clavettes (45) traversant ledit deuxième manchon (19), et un troisième profil (47) formé dans ledit premier manchon (17) et apte à pousser lesdites troisièmes clavettes (45) en butée contre le bord amont (49) dudit troisième manchon (21) lorsque ledit deuxième manchon (19) se déplace en aval dudit premier manchon (17), de manière à bloquer le troisième manchon (21) entre ces troisièmes clavettes (45) et ledit épaulement (43).

5. Dispositif selon l'une quelconque des revendications précédentes, **caractérisé en ce qu'**il comprend des moyens (51) pour amortir la butée avale dudit deuxième manchon (43) sur ledit premier manchon (17).

6. Inverseur de poussée (1) à capot coulissant (7) et à tuyère adaptative (11), **caractérisé en ce qu'**il comprend au moins un dispositif conforme à l'une quelconque des revendications précédentes.

7. Nacelle pour moteur d'aéronef, **caractérisée en ce qu'**elle comprend un inverseur de poussée (1) conforme à la revendication 6.

## Patentansprüche

1. Verriegelungs-/Entriegelungsvorrichtung für einen Schubumkehrer (1) mit Schiebeabdeckung (7) und adaptiver Düse (11), **dadurch gekennzeichnet, dass** sie Folgendes aufweist:
- einen stationären Finger (18), der fest mit der stationären Struktur (9) des Umkehrers verbunden ist,
- einen ersten Stutzen (17), der fest mit der Schiebeabdeckung verbunden und geeignet ist, um den Finger (18) aufzunehmen,
- einen zweiten Stutzen (19), der auf dem ersten Stutzen (17) gleitend montiert ist,
- einen dritten Stutzen (21), der fest mit der adaptiven Düse (11) verbunden und auf dem zweiten Stutzen (19) gleitend montiert ist,
- erste Verriegelungsmittel, die geeignet sind, um den ersten Stutzen (17) in Bezug auf den Finger (18) zu verriegeln,
- zweite Verriegelungsmittel, die geeignet sind, um den zweiten Stutzen (19) in Bezug auf den ersten Stutzen (17) zu verriegeln,
- dritte Verriegelungsmittel, die geeignet sind, um den dritten Stutzen (21) in Bezug auf den zweiten Stutzen (19) zu verriegeln,
wobei die Einheit dieser Verriegelungsmittel derart eingerichtet ist, dass sich die Vorrichtung insbesondere in einer der folgenden Konfigurationen befinden kann:
- Konfiguration 1, bei der die Schiebeabdeckung (7) an der stationären Struktur (9) verriegelt ist und die adaptive Düse (11) einstellbar ist: Verriegelung des ersten Stutzens (17) auf dem Finger (18), Verriegelung des zweiten Stutzens (19) auf dem ersten Stutzen (17), und Gleitfreiheit des dritten Stutzens (21) in Bezug auf den zweiten Stutzen (19),
- Konfiguration 2, bei der die Schiebeabdeckung (7) offen und fest mit der adaptiven Düse (11) verbunden und gemeinsam mit dieser Düse (11) einstellbar ist: Entriegelung des ersten Stutzens (17) in Bezug auf den Finger (18), Verriegelung des zweiten Stutzens (19) in Bezug auf den ersten Stutzen (17), und Entriegelung des dritten Stutzens (21) in Bezug auf den zweiten Stutzen (19).

2. Vorrichtung nach Anspruch 1, **dadurch gekennzeichnet, dass** die ersten Verriegelungsmittel eine Zone mit geringerem Durchmesser (23), die in dem Finger (18) ausgebildet ist, umfassen, wobei erste Keile (25) den ersten Stutzen (17) durchqueren, ein erstes Profil (27), das in dem zweiten Stutzen (19) ausgebildet und geeignet ist, um die ersten Keile (25) auf den Grund der Zone (23) so schieben, wenn sich der zweite Stutzen (19) nach stromaufwärts des ersten Stutzens (17) verlagert, und eine erste Feder (29), die diesen zweiten Stutzen (19) zu seiner stromaufwärtigen Position zurückstellt.

3. Vorrichtung nach einem der Ansprüche 1 oder 2, **dadurch gekennzeichnet, dass** die zweiten Verriegelungsmittel Hohlräume (33) umfassen, die in dem zweiten Stutzen (19) ausgebildet sind, zweite Keile (35), die den ersten Stutzen (17) durchqueren, einen Stößel (37), der im Inneren des ersten Stutzens (17) gleitend montiert ist und ein zweites Profil (39) aufweist, das geeignet ist, um die zweiten Keile (35) auf den Grund der Hohlräume (33) zu schieben, wenn sich der Stößel (37) nach stromaufwärts des zweiten Stutzens (19) verlagert, und eine zweite Feder (41), die diesen Stößel (37) zu seiner stromaufwärtigen Position bei Berührung des Fingers (18) zurückstellt.

4. Vorrichtung nach einem der vorhergehenden Ansprüche, **dadurch gekennzeichnet, dass** die dritten Verriegelungsmittel einen Ansatz (43) aufweisen, der stromabwärts des zweiten Stutzens (19) ausgebildet ist, dritte Keile (45), die den zweiten Stutzen (19) durchqueren, und ein drittes Profil (47), das in dem ersten Stutzen (17) ausgebildet und geeignet ist, um die dritten Keile (45) zum Anschlag gegen den stromaufwärtigen Rand (49) des dritten Stutzens (21) zu schieben, wenn sich der zweite Stutzen (19) nach stromabwärts des ersten Stutzens (17) verlagert, so dass der dritte Stutzen (21) zwischen diesen dritten Keilen (45) und dem Ansatz (43) blockiert ist.

5. Vorrichtung nach einem der vorhergehenden Ansprüche, **dadurch gekennzeichnet, dass** sie Mittel (51) zum Dämpfen des stromabwärtigen Anschlags des zweiten Stutzens (43) auf dem ersten Stutzen (17) umfasst.

6. Schubumkehrer (1) mit Schiebeabdeckung (7) und mit adaptiver Düse (11), **dadurch gekennzeichnet, dass** er mindestens eine Vorrichtung nach einem der vorhergehenden Ansprüche umfasst.

7. Gondel für Flugzeugtriebwerk, **dadurch gekennzeichnet, dass** sie einen Schubumkehrer (1) nach Anspruch 6 umfasst.

## Claims

1. A locking/unlocking device for a thrust reverser (1) with a sliding cowl (7) and an adaptive nozzle (11), **characterized in that** it comprises :
- a fixed finger (18), secured to the fixed structure (9) of said thrust reverser,
- a first sleeve (17), secured to said sliding cowl and capable of receiving said finger (18),
- a second sleeve (19), slidably mounted on said first sleeve (17),
- a third sleeve (21), secured to said adaptive nozzle (11) and slidably mounted on said second sleeve (19),
- first locking means, capable of locking said first sleeve (17) relative to said finger (18),
- second locking means, capable of locking said second sleeve (19) relative to said first sleeve (17),
- third locking means, capable of locking said third sleeve (21) relative to said second sleeve (19),
all of said locking means being arranged so that said device could be in particular in one of the following configurations :
- configuration 1, in which said sliding cowl (7) is locked to said fixed structure (9) and said adaptive nozzle (11) is adjustable : locking of said first sleeve (17) on said finger (18), locking of said second sleeve (19) on said first sleeve (17), and free sliding of said third sleeve (21) relative to said second sleeve (19) ;
- configuration 2, in which said sliding cowl (7) is open and secured to said adaptive nozzle (11), and adjustable in conjunction with this nozzle (11): unlocking of said first sleeve (17) relative to said finger (18), locking of said second sleeve (19) relative to said first sleeve (17), and locking of said third sleeve (21) relative to said second sleeve (19).

2. The device according to claim 1, **characterized in that** said first locking means comprise an area of lesser diameter (23) formed in said finger (18), first keys (25) crossing through said first sleeve (17), a first profile (27) formed in the second sleeve (19) and capable of pushing said first keys (25) to the bottom of said area (23) when said second sleeve (19) moves upstream of said first sleeve (17), and a first spring (29) returning this second sleeve (19) toward its upstream position.

3. The device according to any of claims 1 or 2, **characterized in that** said second locking means comprise cavities (33) formed in said second sleeve (19), second keys (35) crossing through said first sleeve (17), a slider (37) slidably mounted inside said first sleeve (17) and including a second profile (39) capable of pushing said second keys (35) to the bottom of said cavities (33) when said slider (37) moves upstream of said second sleeve (19), and a second spring (41) returning this slider (37) toward its upstream position, on contact with said finger (18).

4. The device according to any one of the preceding claims, **characterized in that** said third locking means comprise a shoulder (43) formed downstream of said second sleeve (19), third keys (45) crossing through said second sleeve (19), and a third profile (47) formed in said first sleeve (17) and capable of pushing said third keys (45) in abutment against the upstream edge (49) of said third sleeve (21) when said second sleeve (19) moves downstream of said first sleeve (17), so as to block the third sleeve (21) between these third keys (45) and said shoulder (43).

5. The device according to any one of the preceding claims, **characterized in that** it comprises means (51) for damping the downstream abutment of said second sleeve (43) on said first sleeve (17).

6. A thrust reverser (1) with a sliding cowl (7) and an adaptive nozzle (11), **characterized in that** it comprises at least one device in accordance with any one of the preceding claims.

7. A nacelle for an aircraft engine, **characterized in that** it comprises a thrust reverser (1) in accordance with claim 6.
